# EUROPEAN PATENT APPLICATION

(11) **EP 4 443 973 A1**
(43) Date of publication of application: **09.10.2024**
(21) Application number: 24164313.9
(22) Date of filing: 18.03.2024
(51) Int. Cl.: H04W 36/08, H04W 36/00, H04W 56/00, H04W 88/08

(54) **TIMING ADVANCE ACQUISITION METHODS IN A MOBILE NETWORK**

(30) Priority: 06.04.2023 US 202363494661 P
(71) Applicant: Nokia Technologies Oy, 02610 Espoo (FI)
(72) Inventor: SPAPIS, Panagiotis, 81475 Munich (DE); KARABULUT, Umur, 81379 Munich (DE); GOYAL, Sanjay, Denville, 07834 (US); KARIMIDEHKORDI, Ali, 81545 Munich (DE); GÜRSU, Halit Murat, 81249 Munchen (DE); KAKKAVAS, Anastasios, 80331 Munich (DE); KOSKELA, Timo, 90670 Oulu (FI); ARJONA, Andres, Tokyo, 153-0043 (JP)
(74) Representative: Bryers Intellectual Property Ltd

(57) **Abstract**

In accordance with an example embodiment of the present disclosure an apparatus is provided for Layer1/Layer2 triggered mobility procedure of a mobile network. The apparatus has at least one processor; and at least one memory including executable instructions that, when executed by the at least one processor, cause the apparatus to choose, in a centralized unit, CU, a timing advance, TA, acquisition method for the mobility procedure among a plurality of TA acquisition options; and to communicate the chosen TA acquisition method from the CU to a distributed unit, DU.

## Description

### TECHNICAL FIELD

Various example embodiments relate to timing advance acquisition methods in a mobile network.

### BACKGROUND

Mobility (i.e. allowing a user equipment to move from one serving cell to another one) is one important aspect of mobile networks. The present disclosure relates to development of mobility procedures of mobile networks and timing advance acquisition methods of the mobility procedures.

### SUMMARY

The scope of protection sought for various embodiments of present disclosure is set out by the independent claims. The embodiments and features, if any, described in this specification that do not fall under the scope of the independent claims are to be interpreted as examples useful for understanding various example embodiments.

According to a first example aspect of the present disclosure, there is provided an apparatus comprising:
at least one processor; and
at least one memory including executable instructions that, when executed by the at least one processor, cause the apparatus
   to participate in a Layer1/Layer2 triggered mobility procedure of a mobile network;
   to choose, in a centralized unit, CU, a timing advance, TA, acquisition method for the mobility procedure among a plurality of TA acquisition options; and
   to communicate the chosen TA acquisition method from the CU to a distributed unit, DU.

In some example embodiments, the apparatus of the first example aspect is caused to communicate the chosen TA acquisition method from the CU to two different DUs.

In some example embodiments, the apparatus of the first example aspect is further caused to first communicate the chosen TA acquisition method from the CU to a first DU and wait for a response from the first DU at the CU, and thereafter communicate the chosen TA acquisition method from the CU to a second DU and wait for a response from the second DU at the CU. In some example embodiments, the first DU is a target DU and the second DU is a source DU. In some example embodiments, the first DU is a source DU and the second DU is a target DU.

In some example embodiments, the apparatus of the first example aspect is further caused to inform the second DU of the response of the first DU when communicating the chosen TA acquisition method to the second DU.

In some example embodiments, the apparatus of the first example aspect is further caused to wait for a response from the DU at the CU, the response comprising an acceptance of the chosen TA acquisition method or a counter proposal for the TA acquisition method; and
if the response comprises the counter proposal, change the chosen TA acquisition method based on the response.

In some example embodiments, the apparatus of the first example aspect is further caused to communicate the chosen TA acquisition method from the CU to a user equipment, UE.

In some example embodiments, the apparatus of the first example aspect is further caused to receive, at the CU, a DU-initiated message with an update proposal for the chosen TA acquisition method;
to evaluate the update proposal;
to choose a new TA acquisition method; and
to send from the CU to the DU, a message indicating the new TA acquisition method. In some example embodiments, the message with the update proposal for the chosen TA acquisition method is received from a first DU and apparatus is caused to communicate the new TA acquisition method from the CU to a second DU and to wait for a response from the second DU.

In some example embodiments, the TA acquisition method is chosen based on one or more of the following: capabilities of a user equipment, UE, involved in the Layer1/Layer2 triggered mobility procedure, source/target DU capabilities, and source/target DU load.

According to a second example aspect of the present disclosure, there is provided an apparatus comprising
at least one processor; and
at least one memory including executable instructions that, when executed by the at least one processor, cause the apparatus
   to participate in a Layer1/Layer2 triggered mobility procedure of a mobile network;,
   to receive, at a distributed unit, DU, a message indicating a chosen timing advance, TA, acquisition method for the mobility procedure from a centralized unit, CU, wherein the chosen TA acquisition method is amongst a plurality of TA acquisition methods supported by the apparatus; and
   to respond to the CU with a response comprising an acceptance of the chosen TA acquisition method or a counter proposal for the TA acquisition method.

In some example embodiments, the DU is a target DU.

In some example embodiments, the DU is a source DU.

In some example embodiments, the apparatus of the second example aspect is further caused
to identify, at the DU, a need to update the TA acquisition method;
to select another TA acquisition method amongst the plurality of supported TA acquisition methods; and
to send, from the DU to the CU, a message indicating the selected another TA acquisition method.

In some example embodiments, the apparatus of the second example aspect is caused to identify the need to update the TA acquisition method based on one or more of the following: scheduling restrictions of the DU, processing load of the DU.

In some example embodiments, the apparatus of the second example aspect is further caused to communicate, in response to receiving the chosen TA acquisition method, the chosen TA acquisition method from the DU to the UE.

According to a third example aspect of the present disclosure, there is provided an apparatus comprising
at least one processor; and
at least one memory including executable instructions that, when executed by the at least one processor, cause the apparatus
   to receive, at a user equipment, UE, from a mobile network, a Layer1/Layer2 triggered mobility configuration, wherein the Layer1/Layer2 triggered mobility configuration indicates a chosen timing advance, TA, acquisition method for the mobility procedure, wherein the chosen TA acquisition method is amongst a plurality of TA acquisition methods supported by the apparatus; and
   to acquire, in connection with Layer1/Layer2 triggered handover from a source distributed unit, DU, to a target DU, a TA of the target DU according to the chosen TA acquisition method.

In some example embodiments, the plurality of TA acquisition methods comprise a plurality of the following: TA acquisition from the source DU in a random access procedure, TA acquisition from the target DU in a random access procedure, and TA acquisition in a Layer1/Layer2 cell switch command.

According to a fourth example aspect of the present disclosure, there is provided a method, comprising:
participating in a Layer1/Layer2 triggered mobility procedure of a mobile network, choosing, in a centralized unit, CU, a timing advance, TA, acquisition method for the mobility procedure among a plurality of TA acquisition options; and
communicating the chosen TA acquisition method from the CU to a distributed unit, DU.

According to a fifth example aspect of the present disclosure, there is provided a computer program comprising instructions for performing at least the following:
participating in a Layer1/Layer2 triggered mobility procedure of a mobile network, choosing, in a centralized unit, CU, a timing advance, TA, acquisition method for the mobility procedure among a plurality of TA acquisition options; and
communicating the chosen TA acquisition method from the CU to a distributed unit, DU.

According to a sixth example aspect of the present disclosure, there is provided a method, comprising:
participating in a Layer1/Layer2 triggered mobility procedure of a mobile network, receiving, at a distributed unit, DU, a message indicating a chosen timing advance, TA, acquisition method for the mobility procedure from a centralized unit, CU, wherein
the chosen TA acquisition method is amongst a plurality of TA acquisition methods supported by the apparatus; and
responding to the CU with a response comprising an acceptance of the chosen TA acquisition method or a counter proposal for the TA acquisition method.

According to a seventh example aspect of the present disclosure, there is provided a computer program comprising instructions for performing at least the following:
participating in a Layer1/Layer2 triggered mobility procedure of a mobile network, receiving, at a distributed unit, DU, a message indicating a chosen timing advance, TA, acquisition method for the mobility procedure from a centralized unit, CU, wherein
the chosen TA acquisition method is amongst a plurality of TA acquisition methods supported by the apparatus; and
responding to the CU with a response comprising an acceptance of the chosen TA acquisition method or a counter proposal for the TA acquisition method.

According to an eighth example aspect of the present disclosure, there is provided a method, comprising:
receiving, at a user equipment, UE, from a distributed unit of a mobile network, a Layer1/Layer2 triggered mobility configuration, wherein the Layer1/Layer2 triggered mobility configuration indicates a chosen timing advance, TA, acquisition method for the mobility procedure, wherein the chosen TA acquisition method is amongst a plurality of TA acquisition methods supported by the apparatus; and
acquiring, in connection with Layer1/Layer2 triggered handover from a source distributed unit, DU, to a target DU, a TA of the target DU according to the chosen TA acquisition method.

According to a ninth example aspect of the present disclosure, there is provided a computer program comprising instructions for performing at least the following:
receiving, at a user equipment, UE, from a distributed unit of a mobile network, a Layer1/Layer2 triggered mobility configuration, wherein the Layer1/Layer2 triggered mobility configuration indicates a chosen timing advance, TA, acquisition method for the mobility procedure, wherein the chosen TA acquisition method is amongst a plurality of TA acquisition methods supported by the apparatus; and
acquiring, in connection with Layer1/Layer2 triggered handover from a source distributed unit, DU, to a target DU, a TA of the target DU according to the chosen TA acquisition method.

According to a tenth example aspect of the present disclosure, there is provided an apparatus comprising:
means for participating in a Layer1/Layer2 triggered mobility procedure of a mobile network;
means for choosing, in a centralized unit, CU, a timing advance, TA, acquisition method for the mobility procedure among a plurality of TA acquisition options; and means for communicating the chosen TA acquisition method from the CU to a distributed unit, DU.

In some example embodiments, the apparatus of the tenth example aspect further comprises means for communicating the chosen TA acquisition method from the CU to two different DUs. In some example embodiments, the apparatus of the tenth example aspect further comprises means for first communicating the chosen TA acquisition method from the CU to a first DU and waiting for a response from the first DU at the CU, and thereafter communicating the chosen TA acquisition method from the CU to the second DU and waiting for a response from the second DU at the CU.

In some example embodiments, the first DU is a target DU and the second DU is a source DU. In some example embodiments, the first DU is a source DU and the second DU is a target DU.

In some example embodiments, the apparatus of the tenth example aspect further comprises means for informing the second DU of the response of the first DU when communicating the chosen TA acquisition method to the second DU.

In some example embodiments, the apparatus of the tenth example aspect further comprises means for waiting for a response from the DU at the CU, the response comprising an acceptance of the chosen TA acquisition method or a counter proposal for the TA acquisition method; and if the response comprises the counter proposal, changing the chosen TA acquisition method based on the response.

In some example embodiments, the apparatus of the tenth example aspect further comprises communicating the chosen TA acquisition method from the CU to a user equipment, UE.

In some example embodiments, the apparatus of the tenth example aspect further comprises means for receiving, at the CU, a DU-initiated message with an update proposal for the chosen TA acquisition method;
means for evaluating the update proposal;
means for choosing a new TA acquisition method; and
means for sending from the CU to the DU, a message indicating the new TA acquisition method.

In some example embodiments, the message with the update proposal for the chosen TA acquisition method is received from a first DU and apparatus comprises means for communicating the new TA acquisition method from the CU to a second DU and means for waiting for a response from the second DU.

In some example embodiments, the TA acquisition method is chosen based on one or more of the following: capabilities of a user equipment, UE, involved in the Layer1/Layer2 triggered mobility procedure, source/target DU capabilities, and source/target DU load.

According to an eleventh example aspect of the present disclosure, there is provided an apparatus comprising
means for participating in a Layer1/Layer2 triggered mobility procedure of a mobile network;,
means for receiving, at a distributed unit, DU, a message indicating a chosen timing advance, TA, acquisition method for the mobility procedure from a centralized unit, CU, wherein the chosen TA acquisition method is amongst a plurality of TA acquisition methods supported by the apparatus; and
means for responding to the CU with a response comprising an acceptance of the chosen TA acquisition method or a counter proposal for the TA acquisition method.

In some example embodiments, the DU is a target DU.

In some example embodiments, the DU is a source DU.

In some example embodiments, the apparatus of the eleventh example aspect further comprises
means for identifying, at the DU, a need to update the TA acquisition method;
means for selecting another TA acquisition method amongst the plurality of supported TA acquisition methods; and
means for sending, from the DU to the CU, a message indicating the selected another TA acquisition method.

In some example embodiments, the apparatus of the eleventh example aspect comprises means for identifying the need to update the TA acquisition method based on one or more of the following: scheduling restrictions of the DU, processing load of the DU.

In some example embodiments, the apparatus of the eleventh example aspect further comprises means for communicating, in response to receiving the chosen TA advance acquisition method, the chosen TA advance acquisition method from the DU to the UE. According to a twelfth example aspect of the present disclosure, there is provided an apparatus comprising
means for receiving, at a user equipment, UE, from a mobile network, a Layer1/Layer2 triggered mobility configuration, wherein the Layer1/Layer2 triggered mobility configuration indicates a chosen timing advance, TA, acquisition method for the mobility procedure, wherein the chosen TA acquisition method is amongst a plurality of TA acquisition methods supported by the apparatus; and
means for acquiring, in connection with Layer1/Layer2 triggered handover from a source distributed unit, DU, to a target DU, a TA of the target DU according to the chosen TA acquisition method.

In some example embodiments, the plurality of TA acquisition methods comprise a plurality of the following: TA acquisition from the source DU in a random access procedure, TA acquisition from the target DU in a random access procedure, and TA acquisition in a Layer1/Layer2 cell switch command.

The computer program of the fifth, seventh and/or ninth example aspect may be stored in a non-transitory computer readable memory medium. The term non-transitory as used herein is a limitation of the medium itself (i.e. tangible, not a signal) as opposed to a limitation on data storage persistency (e.g. RAM vs. ROM).

Any foregoing memory medium may comprise a digital data storage such as a data disc or diskette, optical storage, magnetic storage, holographic storage, opto-magnetic storage, phase-change memory, resistive random access memory, magnetic random access memory, solid-electrolyte memory, ferroelectric random access memory, organic memory or polymer memory. The memory medium may be formed into a device without other substantial functions than storing memory or it may be formed as part of a device with other functions, including but not limited to a memory of a computer, a chip set, and a sub assembly of an electronic device. The various means of the apparatus of the tenth, eleventh and/or twelfth example aspect may comprise a processor; and a memory including executable instructions that, when executed by the processor, cause the performance of the means.

Different non-binding example aspects and embodiments of the present invention have been illustrated in the foregoing. The embodiments in the foregoing are used merely to explain selected aspects or steps that may be utilized in implementations of the embodiment of the present disclosure. Some embodiments may be presented only with reference to certain example aspects. It should be appreciated that corresponding embodiments may apply to other example aspects as well.

### BRIEF DESCRIPTION OF THE DRAWINGS

For a more complete understanding of example embodiments of the present invention, reference is now made to the following descriptions taken in connection with the accompanying drawings in which:
Figs. 1A-1C show signaling diagrams of L1/L2 triggered mobility procedure;
Figs. 2-4 are flow diagrams of processes according to example embodiments;
Fig. 5 shows a signaling diagram of L1/L2 triggered mobility procedure according to an example embodiment;
Fig. 6 shows a signaling diagram of L1/L2 triggered mobility procedure according to another example embodiment; and
Figs. 7-8 show block diagrams of apparatuses according to example embodiments.

### DETAILED DESCRIPTON OF THE DRAWINGS

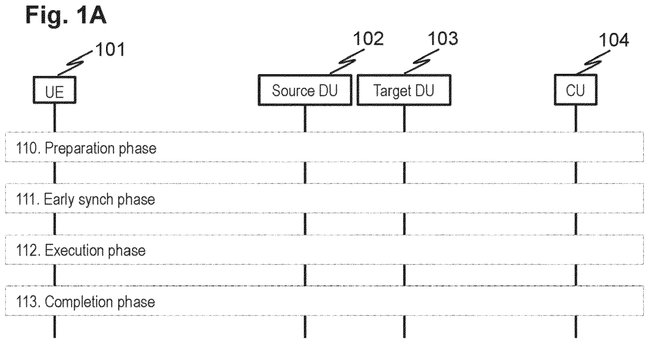

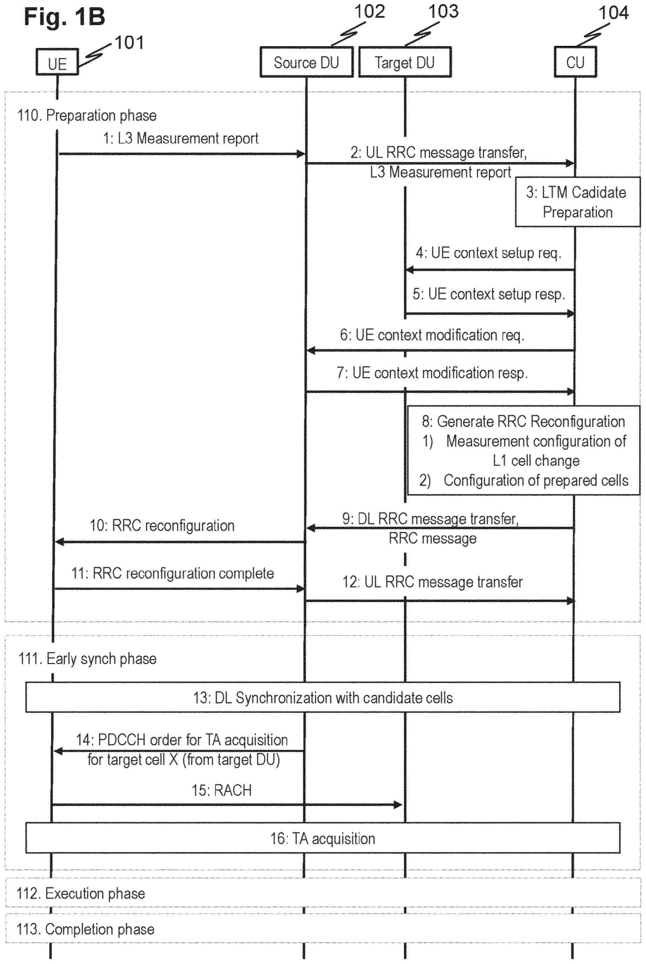

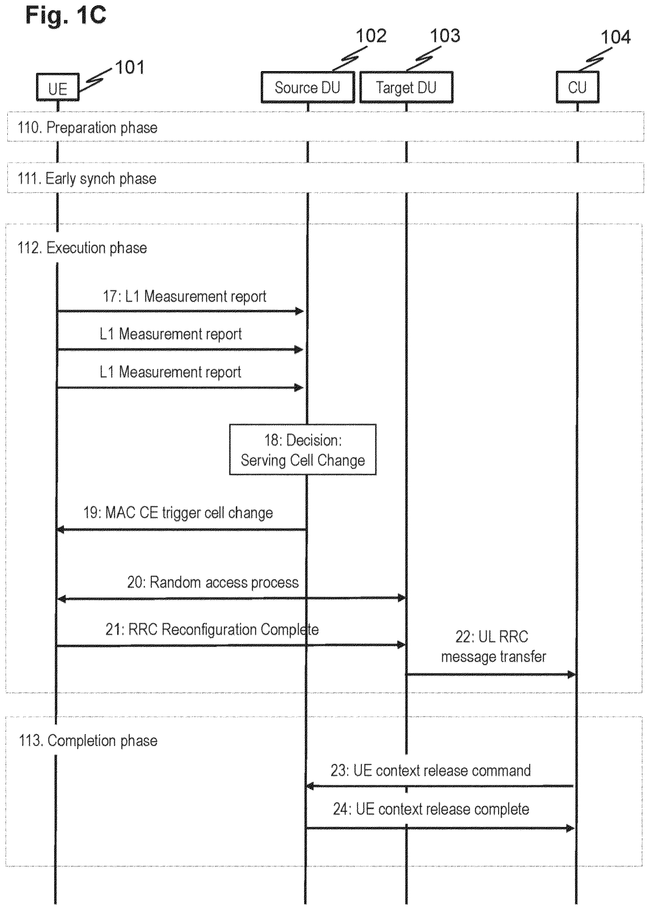

An example embodiment of the present disclosure and its potential advantages are understood by referring to Figs. 1 through 4 of the drawings. In this document, like reference signs denote like parts or steps.

In the following, various example embodiments of present disclosure are discussed in detail in the context of 5G NR technology. It is however to be noted that various example embodiments of present disclosure may be equally applied to other mobile networks and radio communication technologies (e.g. future technologies) in addition to 5G NR.

The radio access network (RAN) of a mobile network may be split into a radio unit (RU), a distributed unit (DU), and a centralised unit (CU). The RU is where the radio frequency signals are transmitted, received, amplified, and digitized. The RU is located near or integrated into, the antenna. The DU and CU are the computation parts of the base station (gNB in 5G), sending the digitalized radio signal into the network. The split of the functionalities between the DU and CU may vary. The CU may provide support for the higher layers of the protocol stack while the DU provides support for the lower layers of the protocol stack. Various example embodiments of present disclosure define certain functionalities for the DU and/or CU. It is to be noted that even though the terms DU and CU are used in this disclosure, some other names may be used for the respective units, too, e.g. in future technologies.

Figs. 1A-1C shows signaling diagrams of L1/L2 triggered mobility (LTM) procedure. In the context of the present description, the protocol layers L1, L2, L3 follow the same meaning as in the 3GPP standard specifications. L1 (Layer 1) refers to the physical layer, L2 (Layer 2) refers to the medium access control (MAC), the radio link control (RLC), and the packet data convergence protocol (PDCP) layers, and L3 (Layer 3) refers to the radio resource control (RRC) layer. LTM may thus be understood as a lower layer handover procedure where a handover command is triggered on a protocol layer below L3 (the RRC layer), e.g. on the L1 or L2.

Figs. 1A-1C show a UE (user equipment) 101, a source DU 102, a target DU 103, and a CU 104. In Fig. 1A the L1/L2 triggered mobility (LTM) procedure is divided into phases: preparation phase 110, early synch phase 111, execution phase 112 and completion phase 113. This division is for illustrative purposes and details of the signaling in the different phases are discussed in connection with Figs. 1B and 1C.

Fig. 1B shows example details of the preparation phase 110 and the early synch phase 111. The procedure of the preparation phase 110 proceeds as follows in steps 1-12:
Steps 1-3: The UE 101 sends a L3 Measurement Report message to the CU 104 via the source DU 102. The CU 104 decides to use LTM and initiates LTM candidate cells preparation.
Steps 4-5: The CU 104 sends a UE context setup request to the target DU 103 for the preparation of the target cells. The target DU 103 responds.
Steps 6-7: The CU 104 sends a UE context modification request to the source DU 102 for the preparation of the target cells in the source DU 102. Additionally this message may be used for the provision of target cell information to the source DU 102. The source DU 102 responds. Steps 8-12: The CU 104 prepares the RRC Configuration and provides it to the UE 101 (via the source DU 102). The UE 101 stores the configuration of LTM candidate target cell(s) and transmits a RRCReconfigurationComplete message to the CU 104.

The procedure of the early synch phase 111 proceeds as follows in steps 13-16:
Step 13: The UE 101 may perform DL synchronization.
Steps 14-16: The source DU 102 indicates to the UE 101 to perform Timing Advance (TA) acquisition using RACH to the target DU 103. The TA is then provided to the UE 101 in step 16. This phase is referred to as an TA acquisition and there are multiple methods that can be used in the TA acquisition.

Fig. 1C shows example details of the execution phase 112 and the completion phase 113. The procedure of the execution phase 112 proceeds as follows in steps 17-22:
Step 17: The UE 101 performs L1 measurements on the configured LTM candidate target cell(s) and transmits lower-layer measurement reports to the source DU 102.
Step 18-19: The source DU 102 decides to execute LTM cell switch to a target cell and transmits to the UE 101 a MAC CE triggering LTM cell switch.
Step 20: The UE 101 switches to the configuration of the LTM candidate target cell and accesses the target cell. If needed (if TA is not available) the UE 101 performs Random Access process.
Steps 21-22: The UE 101 indicates successful completion of the LTM cell switch towards target cell using an RRC Reconfiguration complete message.

The procedure of the completion phase 113 proceeds as follows in steps 23-24:
Steps 23-24: UE context is released from the source DU 102 if the CU 104 decides accordingly.

It is to be noted that the procedure of Figs. 1A-1C may be extended to inter CU case, where the serving CU may contact another target CU based on L3 measurements to prepare target DU/cells from the target CU. In such case the UE would receive the preparation of those target DU/cells, accordingly, and the source DU may be informed about the target DU/cell preparation configurations, if this is needed.

There is an identified problem in step 16 of Fig. 1B as there are multiple methods that can be used in the TA acquisition whereby it is unclear to the UE and the DUs which of the available options to follow. Three options for the TA acquisition methods can be identified:
1) RAR reception - via the source DU (i.e. TA provisioning via the source DU by providing RAR)
2) No RAR reception - e.g., TA in the cell switch command (i.e. TA provisioning via MAC CE from the source DU for cell change including the TA for the target cell)
3) RAR reception - by the target DU (i.e. TA provisioning via RAR from the target Cell/DU).

Various example embodiments of present disclosure provide solution to this problem by defining which entity to is responsible for choosing which option to use and how the chosen option is communicated to other involved entities.

According to an example embodiment, the CU chooses which option to use and communicates the proposed option to the DUs. The DUs may accept the proposal or counter propose an alternative option. In this way, there is a clearly defined procedure while at the same time both the CU and the DUs may affect the final decision.

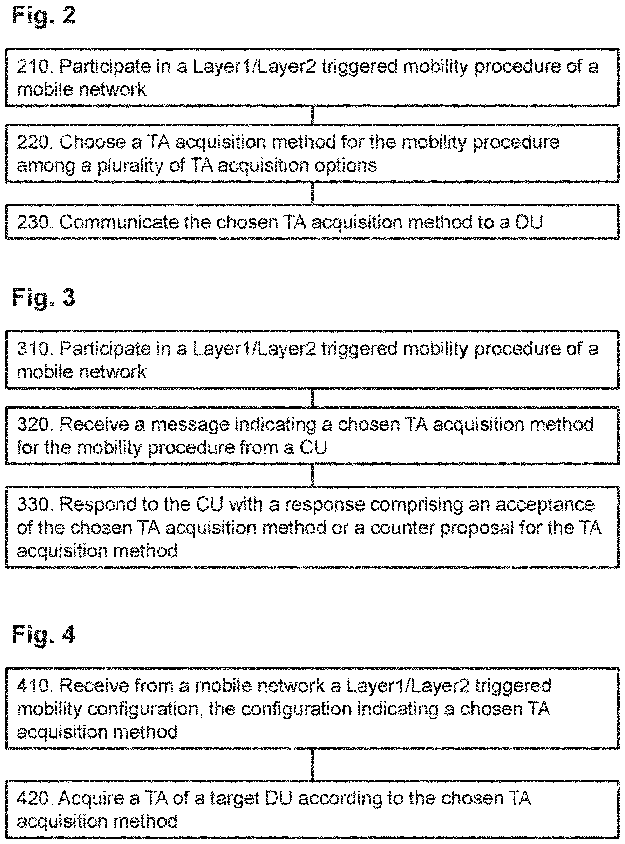

Figs. 2-4 are flow diagrams of processes according to example embodiments. The processes may be implemented in one or more computer programs comprising instructions for performing the steps of the respective process.

Fig. 2 shows a process to be performed in a CU of a mobile network. The process comprises the following steps:
210: Participating in a Layer1/Layer2 triggered mobility procedure of a mobile network.
220: Choosing a TA acquisition method for the mobility procedure among a plurality of TA acquisition options. The plurality of TA acquisition methods may comprise a plurality of the following: TA acquisition from the source DU in a random access procedure, TA acquisition from the target DU in a random access procedure, and TA acquisition in a Layer1/Layer2 cell switch command.

The TA acquisition method may be chosen based on one or more of the following: capabilities of a UE involved in the Layer1/Layer2 triggered mobility procedure, source/target DU capabilities, and source/target DU load.

Some examples of choosing the TA acquisition method are discussed in the following:
1) Capabilities of the UE: If the UE does not have capabilities required in one of the TA acquisition method options, such option is not chosen.
2) Source/target DU capabilities: If the source DU or the target DU does not have radio resources to schedule RAR, respectively TA acquisition from the source DU in a random access procedure or TA acquisition from the target DU in a random access procedure is not chosen.
3) Source/target DU load: If the source DU or the target DU has too many UEs, respectively TA acquisition from the source DU in a random access procedure or TA acquisition from the target DU in a random access procedure is not chosen.

230: Communicating the chosen TA acquisition method to a DU. The chosen TA acquisition method may be communicated for example in a UE context setup request or in a UE context modification request. The chosen TA acquisition method may be separately communicated to a source DU and to a target DU.

The process of Fig. 2 may comprise first communicating the chosen TA acquisition method to a first DU and waiting for a response from the first DU, and thereafter communicating the chosen TA acquisition method to a second DU and waiting for a response from the second DU. The first DU may be a target DU and the second DU may be a source DU, or vice versa. Further, the process of Fig. 2 may comprise informing the second DU of the response of the first DU when communicating the chosen TA acquisition method to the second DU.

The process of Fig. 2 may comprise waiting for a response from the DU. The response comprises an acceptance of the chosen TA acquisition method or a counter proposal for the TA acquisition method; and if the response comprises the counter proposal, the chosen TA acquisition method may be changed based on the response, if this is possible.

The process of Fig. 2 may comprise communicating the chosen TA acquisition method to a respective UE. The chosen TA acquisition method may be included in RRC messaging and conveyed to the UE via the source DU.

The process of Fig. 2 may comprise receiving a DU-initiated message with an update proposal for the chosen TA acquisition method; evaluating the update proposal; choosing a new TA acquisition method; and sending to the DU, a message indicating the new TA acquisition method. The message with the update proposal for the chosen TA acquisition method may be received from a first DU and the process of Fig. 2 may further comprise communicating the new TA acquisition method to a second DU and waiting for a response from the second DU. Fig. 3 shows a process to be performed in a DU of a mobile network. The process may be performed in a source DU or in a target DU or both of these. The process comprises the following steps:
310: Participating in a Layer1/Layer2 triggered mobility procedure of a mobile network.
320: Receiving a message indicating a chosen timing advance, TA, acquisition method for the mobility procedure from a centralized unit, CU. The chosen TA acquisition method is chosen amongst a plurality of TA acquisition methods supported by the DU. The chosen TA acquisition method may be received for example in a UE context setup request or in a UE context modification request.

The plurality of TA acquisition methods may comprise a plurality of the following: TA acquisition from the source DU in a random access procedure, TA acquisition from the target DU in a random access procedure, and TA acquisition in a Layer1/Layer2 cell switch command.

330: Responding to the CU with a response comprising an acceptance of the chosen TA acquisition method or a counter proposal for the TA acquisition method.

The process of Fig. 3 may further comprise identifying a need to update the TA acquisition method; selecting another TA acquisition method amongst the plurality of supported TA acquisition methods; and sending to the CU, a message indicating the selected another TA acquisition method. The need to update the TA acquisition method may be identified based on one or more of the following: scheduling restrictions of the DU, processing load of the DU. The message indicating the selected another TA acquisition method may be a Context Modification Required message and the CU may respond with a UE context modification confirm message. Alternatively, a new message may be used for this purpose.

The process of Fig. 3 may further comprise communicating, in response to receiving the chosen TA acquisition method, the chosen TA acquisition method to the UE.

Fig. 4 shows a process to be performed in a UE. The process comprises the following steps: 410: Receiving from a mobile network, a Layer1/Layer2 triggered mobility configuration. The Layer1/Layer2 triggered mobility configuration indicates a chosen timing advance, TA, acquisition method for the mobility procedure. The chosen TA acquisition method is chosen amongst a plurality of TA acquisition methods supported by the UE. The chosen TA acquisition method may be received for example in RRC messaging.

The plurality of TA acquisition methods may comprise a plurality of the following: TA acquisition from the source DU in a random access procedure, TA acquisition from the target DU in a random access procedure, and TA acquisition in a Layer1/Layer2 cell switch command.

420: Acquiring, in connection with Layer1/Layer2 triggered handover from a source DU to a target DU, a TA of the target DU according to the chosen TA acquisition method.

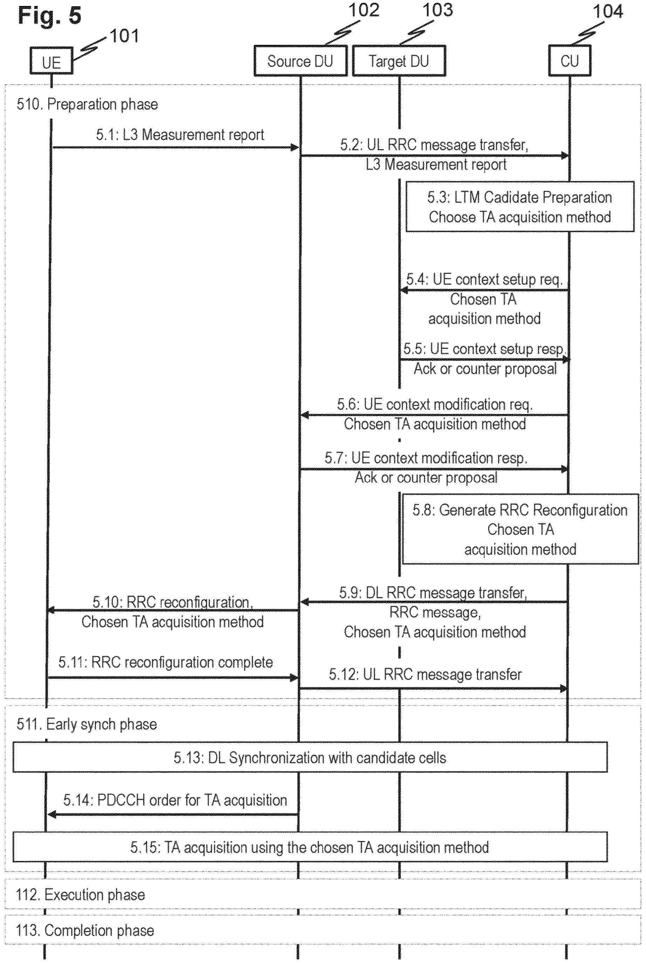

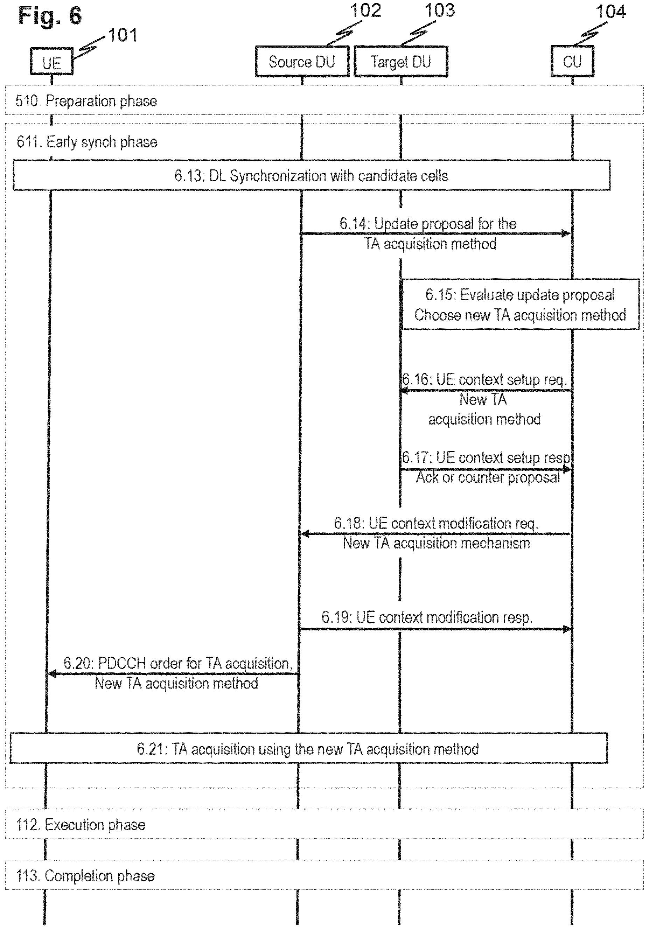

Details of some further example embodiments of present disclosure are discussed in connection with Figs. 5 and 6. It is to be noted that some optional features may be disclosed and clearly all steps of Figs. 5 and 6 are not always mandatory. It is to be noted that the names of the messages discussed in connection with Figs. 5 and 6 are specific to the example embodiments, but it not mandatory to use the messages with these names. Instead differently named messages or different messages may equally be used for the same purpose.

Fig. 5 shows a signaling diagram of the L1/L2 triggered mobility procedure according to an example embodiment. Fig. 5 shows a UE (user equipment) 101, a source DU 102, a target DU 103, and a CU 104. In Fig. 5 the L1/L2 triggered mobility (LTM) procedure is divided into phases: preparation phase 510, early synch phase 511, execution phase 112 and completion phase 113. In a similar manner as in Figs. 1A-1C, this division is for illustrative purposes.

Fig. 5 shows a procedure with coordination based on a CU decision. The procedure of the preparation phase 510 proceeds as follows in steps 5.1-5.12:
Steps 5.1-5.2: The UE 101 sends a L3 Measurement Report message to the CU 104 via the source DU 102. These steps correspond to the steps 1-2 of Fig. 1B.
Step 5.3: The CU 104 decides to use LTM and initiates LTM candidate cells preparation. The CU 104 additionally chooses a TA acquisition method among a plurality of options. That is, the CU 104 decides which one of the TA acquisition options is to be followed in the mobility procedure. The decision may be based on one or more of the following: UE capabilities, source/target DU capabilities, and source/target DU load (if available).

The plurality of options of the TA acquisition method may comprise
Option 1) RAR reception - via the source DU
Option 2) No RAR reception - e.g., TA in the cell switch command
Option 3) RAR reception - by the target DU.

The source DU 102 and the target DU 103 are configured to support the plurality of options of the TA acquisition method.

It is to be noted that some other additional or alternative options may be available, too. Steps 5.4-5.5: The CU 104 sends a UE context setup request to the target DU 103 for the preparation of the target cells. In this message the CU 104 communicates the chosen TA acquisition method to the target DU 103. The target DU 103 may accept the proposal or counter propose an alternative option in a response message. Additionally or alternatively, the target DU 103 may have a possibility of rejecting the use of any TA acquisition method. Steps 5.6-5.7: The CU 104 sends a UE context modification request to the source DU 102 for the preparation of the target cells in the source DU 102. Additionally this message may be used for the provision of target cell information to the source DU 102. In this message the CU 104 communicates the chosen TA acquisition method to the source DU 102. In this phase the chosen TA acquisition method may be considered to be a decision agreed between the CU 104 and the target DU 103. The source DU 102 may accept the proposal or counter propose an alternative option in a response message. Additionally or alternatively, the source DU 102 may have a possibility of rejecting the use of any TA acquisition method.

If the target DU 103 or the source DU 102 counter propose an alternative option for the TA acquisition method, the CU 104 may respond with an ack message if the counter proposal is accepted.

It is to be noted that alternatively, the order of the steps 4-5 and 6-7 may be changed and the chosen TA acquisition method may be first communicated to the source DU 102 and thereafter to the target DU 103.

If the target DU 103 and/or the source DU 102 make a counter proposal, the steps 5.3-5.7 may be repeated in order to reach an agreement on the chosen TA acquisition method between the CU 104 and the source DU 103 and the target DU 102.

Steps 5.8-5.12: The CU 104 prepares the RRC Configuration and provides it to the UE. The UE stores the configuration of LTM candidate target cell(s) and transmits a RRCReconfigurationComplete message to the CU 104. At the same time the CU 104 communicates the chosen TA acquisition method to the UE 101.

The procedure of the early synch phase 511 proceeds as follows in steps 5.13-5.15:
Step 5.13: The UE may perform DL synchronization. This step corresponds to the step 13 of Fig. 1B.
Step 5.14: The Source DU sends a PDCCH order to trigger TA acquisition. This step corresponds to the step 14 of Fig. 1B.
Steps 5.15: The UE 101 performs the TA acquisition following the option that it is communicated in the RRC Reconfiguration message in step 5.10. That is, the UE 101 performs the option that corresponds to the information communicated to the UE.

The procedures of the execution phase 112 and the completion phase 113 may proceed as disclosed in Fig. 1C.

Fig. 6 shows a signaling diagram of the L1/L2 triggered mobility procedure according to another example embodiment. Fig. 6 shows a UE (user equipment) 101, a source DU 102, a target DU 103, and a CU 104. In Fig. 6 the L1/L2 triggered mobility (LTM) procedure is divided into phases: preparation phase 510, early synch phase 611, execution phase 112 and completion phase 113. In a similar manner as in Figs. 1A-1C, this division is for illustrative purposes.

Fig. 6 shows a procedure allowing the source DU 102 to trigger update of the CU decision on the chosen TA acquisition method. The procedure proceeds as follows:
The procedure of the preparation phase 510 may proceed as disclosed in Fig. 5.

The procedure of the early synch phase 611 proceeds as follows in steps 6.13-6.21:
Step 6.13: The UE may perform DL synchronization. This step corresponds to the step 13 of Fig. 1B.
Step 6.14: The source DU 102 identifies a need to update the chosen TA acquisition method. I.e. the source DU 102 identifies a need for a different option for the TA acquisition method. This identification may be for example due to scheduling restrictions, processing load, etc. Then the source DU 102 sends to the CU 104 a message with an update proposal for the TA acquisition method. This message can be a request response-message - such as a UE Context modification required and respective confirmation (the confirmation is omitted from the Fig. 3 for the sake of simplicity). For the sake of clarity, it is noted that the update proposal is an indication of another option of the TA acquisition method. The message indicating the selected another TA acquisition method may be a Context Modification Required message and the CU may respond with a UE context modification confirm message. Alternatively, a new message may be used for this purpose.
Step 6.15: The CU 104 evaluates the update proposal from the source DU 102 and accepts it or rejects it to choose a new TA acquisition method.
Steps 6.16-6.17: If the CU 104 accepts the update proposal from the source DU 102, the CU 104 sends a UE context setup request with the new TA acquisition method to the target DU 103. The target DU 103 may accept the proposal or counter propose an alternative option in a response message. Additionally or alternatively, the target DU 103 may have a possibility of rejecting the use of any TA acquisition method.
Steps 6.18-6.19: The CU 104 sends a UE context modification request with the new TA acquisition method to the source DU 102. The source DU 102 may accept the proposal or counter propose an alternative option in a response message. Additionally or alternatively, the target DU 103 may have a possibility of rejecting the use of any TA acquisition method. If the new decision on the chosen TA acquisition method corresponds to the update proposal of the source DU 102, there is likely no need to counter propose or reject the new TA acquisition method.
Step 6.20: The source DU 102 sends to the UE 101 a PDCCH order to trigger TA acquisition with the new TA acquisition method. That is, the source DU communicates the new TA acquisition method to the UE 101.
Steps 6.21: The UE 101 performs the TA acquisition following the new TA acquisition method. That is, the UE 101 performs the option that correspond to the information communicated to the UE.

The procedures of the execution phase 112 and the completion phase 113 may proceed as disclosed in Fig. 1C.

Similarly to the procedure of Fig. 6, an update of the CU decision on the chosen TA acquisition method may be triggered by the target DU 103. In such case, the target DU 103 may send an UE Context Modification Required message to the CU 104. This would then trigger the steps 6.15, 6.18 and 6.19 of Fig. 6.

It is to be noted that the example embodiments of Figs. 5-6 generally show only one round of communicating the chosen TA acquisition method to the source DU and/or the target DU in steps 5.4-5.7 and steps 6.16-6.19, but clearly communicating the chosen TA acquisition method may be iterated until there is an agreement on the chosen method between the CU and the source DU and/or the target DU.

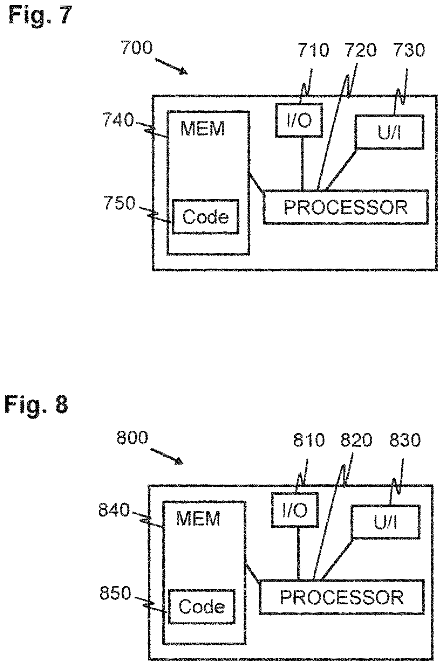

Fig. 7 shows a block diagram of an apparatus 700 according to an example embodiment. The apparatus 700 may operate as a network element, such as the source DU 102, the target DU 103 or the CU 104 of Figs. 1A-1C, 5 and 6. The apparatus 700 generally comprises a memory 740 including a computer program code 750. The apparatus 700 further comprises a processor 720 for controlling the operation of the apparatus 700 using the computer program code 750, and a communication unit 710 for communicating with other network elements and other devices. Further, the apparatus 700 may comprise a user interface unit 730.

The communication unit 710 comprises, for example, one or more of: a local area network (LAN) port; a wireless local area network (WLAN) unit; Bluetooth unit; cellular data communication unit; or satellite data communication unit. The communication interface 710 may support one or more different communication technologies. The communication interface 710 may support Ethernet communications and/or IP based communications. The apparatus 700 may also or alternatively comprise more than one of the communication interfaces 710. The processor 720 comprises, for example, any one or more of: a master control unit (MCU); a microprocessor; a digital signal processor (DSP); an application specific integrated circuit (ASIC); a field programmable gate array; and a microcontroller. The user interface unit 730 may comprise a circuitry for receiving input from a user of the apparatus 700, e.g., via a keyboard; graphical user interface of a display; speech recognition circuitry; or an accessory device; such as a headset; and for providing output to the user via, e.g., a graphical user interface or a loudspeaker. Various parts may be implemented using more than one corresponding or different elements, such as memories and storages may be multiplied for capacity and/or redundancy purposes. Similarly, processing and/or communications may be implemented with multiple parallel or elements for capacity and/or redundancy purposes. The computer program code 750 may control the apparatus 700 to provide one or more example embodiments of present disclosure, such as suitable parts of Figs. 2-3 and 5-6.

Fig. 8 shows a block diagram of an apparatus 800 according to an example embodiment. The apparatus 800 may operate as a user equipment, such as the UE 101 of Figs. 1A-1C, 5 and 6. The apparatus 800 generally comprises a memory 840 including a computer program code 850. The apparatus 800 further comprises a processor 820 for controlling the operation of the apparatus 800 using the computer program code 850, and a communication unit 810 for communicating with other network elements and other devices. Further, the apparatus 800 may comprise a user interface unit 830.

The communication unit 810 comprises, for example, one or more of: a wireless local area network (WLAN) unit; Bluetooth unit; cellular data communication unit; or satellite data communication unit. The communication interface 810 may support one or more different communication technologies. The communication interface 810 may support IP based communications. The apparatus 800 may also or alternatively comprise more than one of the communication interfaces 810. The processor 820 comprises, for example, any one or more of: a master control unit (MCU); a microprocessor; a digital signal processor (DSP); an application specific integrated circuit (ASIC); a field programmable gate array; and a microcontroller. The user interface unit 830 may comprise a circuitry for receiving input from a user of the apparatus 800, e.g., via a keyboard; graphical user interface of a display; speech recognition circuitry; or an accessory device; such as a headset; and for providing output to the user via, e.g., a graphical user interface or a loudspeaker. Various parts may be implemented using more than one corresponding or different elements, such as memories and storages may be multiplied for capacity and/or redundancy purposes. Similarly, processing and/or communications may be implemented with multiple parallel or elements for capacity and/or redundancy purposes.

The computer program code 850 may control the apparatus 800 to provide one or more example embodiments of present disclosure, such as suitable parts of Figs. 4-6.

As used in this application, the term "circuitry" may refer to one or more or all of the following:
(a) hardware-only circuit implementations (such as implementations in only analog and/or digital circuitry) and;
(b) combinations of hardware circuits and software, such as (as applicable):
   (i) a combination of analog and/or digital hardware circuit(s) with software/firmware; and
   (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device. Without in any way limiting the scope, interpretation, or application of the claims appearing below, a technical effect of one or more of the example embodiments disclosed herein is improved mobility procedure for mobile networks as various embodiments provide possibility to negotiate among the involved network entities on the chosen TA acquisition method.

Yet another technical effect of one or more of the example embodiments disclosed herein is that a clearly defined procedure is provided for determining how to perform TA acquisition by the UE including defining which network entity is responsible for making a first proposal and how other network entities may be involved in the procedure.

Embodiments of the present disclosure may be implemented in software, hardware, application logic or a combination of software, hardware, and application logic. The software, application logic and/or hardware may reside e.g. on the source DU 102, the target DU 103 or the CU 104. In an example embodiment, the application logic, software, or an instruction set is maintained on any one of various conventional computer-readable media. In the context of this document, a "computer-readable medium" may be any non-transitory media or means that can contain, store, communicate, propagate, or transport the instructions for use by or in connection with an instruction execution system, apparatus, or device, such as a computer, with one example of a computer described and depicted in Fig. 4. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the before-described functions may be optional or may be combined.

Although various aspects of present disclosure are set out in the independent claims, other aspects may comprise other combinations of features from the described embodiments and/or the dependent claims with the features of the independent claims, and not solely the combinations explicitly set out in the claims.

It is also noted herein that while the foregoing describes example embodiments, these descriptions should not be viewed in a limiting sense. Rather, there are several variations and modifications which may be made without departing from the scope of the present disclosure as defined in the appended claims.

### LIST OF ABBREVIATIONS

- CU: Centralized Unit
- DU: Distributed Unit
- LTM: L1/L2-Triggered Mobility
- MAC: Medium Access Control
- MAC CE MAC: Control Element
- RA: Random Access
- RRC: Radio Resource Control
- UE: User Equipment

## Claims

1. An apparatus comprising:
at least one processor; and
at least one memory including executable instructions that, when executed by the at least one processor, cause the apparatus
to participate in a Layer1/Layer2 triggered mobility procedure of a mobile network;
to choose, in a centralized unit, CU, a timing advance, TA, acquisition method for the mobility procedure among a plurality of TA acquisition options; and
to communicate the chosen TA acquisition method from the CU to a distributed unit, DU.

2. The apparatus of claim 1, wherein the apparatus is caused to communicate the chosen TA acquisition method from the CU to two different DUs.

3. The apparatus of claim 2, wherein the apparatus is further caused to first communicate the chosen TA acquisition method from the CU to a first DU and wait for a response from the first DU at the CU, and thereafter communicate the chosen TA acquisition method from the CU to a second DU and wait for a response from the second DU at the CU.

4. The apparatus of claim 3, wherein the first DU is a target DU and the second DU is a source DU, or vice versa.

5. The apparatus of claim 3 or 4, wherein the apparatus is further caused to inform the second DU of the response of the first DU when communicating the chosen TA acquisition method to the second DU.

6. The apparatus of any preceding claim, wherein the apparatus is further caused
to wait for a response from the DU at the CU, the response comprising an acceptance of the chosen TA acquisition method or a counter proposal for the TA acquisition method; and
if the response comprises the counter proposal, change the chosen TA acquisition method based on the response.

7. The apparatus of any preceding claim, wherein the apparatus is further caused to communicate the chosen TA acquisition method from the CU to a user equipment, UE.

8. The apparatus of any preceding claim, wherein the apparatus is further caused
to receive, at the CU, a DU-initiated message with an update proposal for the chosen TA acquisition method;
to evaluate the update proposal;
to choose a new TA acquisition method; and
to send from the CU to the DU, a message indicating the new TA acquisition method.

9. An apparatus comprising
at least one processor; and
at least one memory including executable instructions that, when executed by the at least one processor, cause the apparatus
to participate in a Layer1/Layer2 triggered mobility procedure of a mobile network;
to receive, at a distributed unit, DU, a message indicating a chosen timing advance, TA, acquisition method for the mobility procedure from a centralized unit, CU, wherein the chosen TA acquisition method is amongst a plurality of TA acquisition methods supported by the apparatus; and
to respond to the CU with a response comprising an acceptance of the chosen TA acquisition method or a counter proposal for the TA acquisition method.

10. The apparatus of claim 9, wherein the DU is a target DU or a source DU.

11. The apparatus of claim 9 or 10, wherein the apparatus is further caused
to identify, at the DU, a need to update the TA acquisition method;
to select another TA acquisition method amongst the plurality of supported TA acquisition methods; and
to send, from the DU to the CU, a message indicating the selected another TA acquisition method.

12. The apparatus of any preceding claim 9 to 11, wherein the apparatus is further caused to communicate, in response to receiving the chosen TA acquisition method, the chosen TA acquisition method from the DU to the UE.

13. An apparatus comprising
at least one processor; and
at least one memory including executable instructions that, when executed by the at least one processor, cause the apparatus
to receive, at a user equipment, UE, from a mobile network, a Layer1/Layer2 triggered mobility configuration, wherein the Layer1/Layer2 triggered mobility configuration indicates a chosen timing advance, TA, acquisition method for the mobility procedure, wherein the chosen TA acquisition method is amongst a plurality of TA acquisition methods supported by the apparatus; and
to acquire, in connection with Layer1/Layer2 triggered handover from a source distributed unit, DU, to a target DU, a TA of the target DU according to the chosen TA acquisition method.

14. The apparatus of claim 13, wherein the plurality of TA acquisition methods comprise a plurality of the following: TA acquisition from the source DU in a random access procedure, TA acquisition from the target DU in a random access procedure, and TA acquisition in a Layer1/Layer2 cell switch command.

15. A method, comprising:
receiving, at a user equipment, UE, from a distributed unit of a mobile network, a Layer1/Layer2 triggered mobility configuration, wherein the Layer1/Layer2 triggered mobility configuration indicates a chosen timing advance, TA, acquisition method for the mobility procedure, wherein the chosen TA acquisition method is amongst a plurality of TA acquisition methods supported by the apparatus; and
acquiring, in connection with Layer1/Layer2 triggered handover from a source distributed unit, DU, to a target DU, a TA of the target DU according to the chosen TA acquisition method.
